# FASCICULE DE BREVET EUROPEEN

(11) **EP 4 302 596 B1**
(45) Date de publication et mention de la délivrance du brevet: **22.01.2025**
(21) Numéro de dépôt: 23183109.0
(22) Date de dépôt: 03.07.2023
(51) Int. Cl.: A01K 7/04, A01K 39/024

(54) **ROBINETTERIE AUTOMATIQUE À FLOTTEUR, NOTAMMENT POUR UN ABREUVOIR POUR ANIMAUX D'ÉLEVAGE, COMPORTANT UN DISPOSITIF ANTI-OSCILLATIONS**
AUTOMATISCHE SCHWIMMERARMATUR, INSBESONDERE FÜR EINE TIERTRÄNKE MIT EINER SCHWINGUNGSHEMMENDEN VORRICHTUNG
AUTOMATIC FLOAT VALVE, IN PARTICULAR FOR A LIVESTOCK WATERER, COMPRISING AN OSCILLATION-PROOF DEVICE

(30) Priorité: 04.07.2022 FR 2206721
(43) Date de publication de la demande: 10.01.2024
(73) Titulaire: La Buvette, 08090 Tournes (FR)
(72) Inventeur: BOUSQUET, Jean-Philippe, 51480 Belval-Sous-Châtillon (FR)
(74) Mandataire: Cabinet Bleger-Rhein-Poupon

(56) Documents cités:
- FR-A1- 2 339 119
- US-A- 1 137 214
- US-A- 3 091 253
- US-A1- 2019 098 867

## Description

La présente invention a trait à un dispositif destiné à limiter, voire à empêcher totalement, les oscillations d'une robinetterie, notamment une robinetterie que comporte un abreuvoir pour animaux d'élevage.

L'invention concerne plus particulièrement une robinetterie automatique à flotteur, notamment pour un abreuvoir.

Ainsi, l'invention entre dans le domaine général de l'agriculture et de l'élevage et, plus particulièrement, dans l'abreuvement des animaux d'élevage.

Traditionnellement, les animaux d'élevage, qu'ils soient dans un local, un enclos ou un pré, sont abreuvés par l'intermédiaire d'un abreuvoir d'une capacité et d'une forme adaptées en fonction notamment du type et du nombre d'animaux.

La présente invention concerne en particulier, mais non limitativement, les abreuvoirs du type installés dans les étables sous forme de cuves, ou de bacs, notamment rectangulaires allongées métalliques ou en matière synthétique, destinées à contenir l'eau.

Pour le confort des animaux, ces abreuvoirs contiennent, en permanence, de l'eau dont le niveau est maintenu sensiblement constant grâce à un système d'alimentation automatique.

Celui-ci se présente, usuellement, sous forme d'une robinetterie automatique à flotteur.

Ainsi, de manière classique, le flotteur plonge dans la cuve de l'abreuvoir et, sous l'impulsion du niveau d'eau remontant dans cette dernière lors du remplissage, commande la fermeture d'un clapet, ce qui empêche une alimentation en eau.

A l'inverse, lorsque le niveau d'eau dans l'abreuvoir baisse, le flotteur va descendre dans la cuve, commandant alors l'ouverture du clapet et, par conséquent, de la robinetterie, permettant ainsi la réalimentation de la cuve en eau.

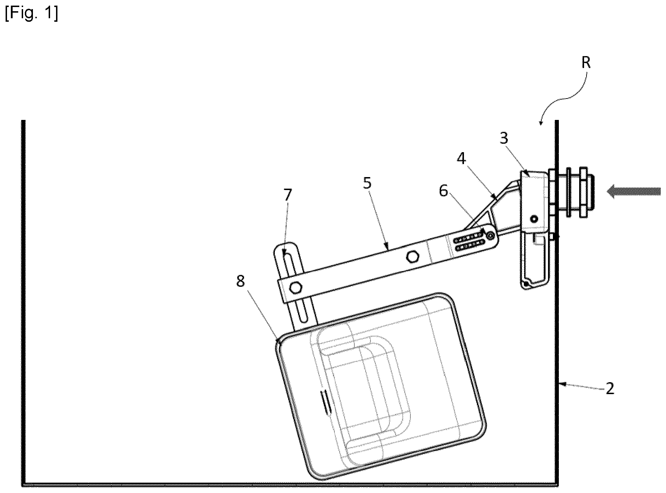

Plus particulièrement, et telle qu'illustré sur la figure 1 des dessins ci-joints, une robinetterie R connue dans l'état de la technique équipant un abreuvoir pour animaux d'élevage, ledit abreuvoir comprenant un bac ou une cuve 2 destinée à être remplie d'eau, comprend notamment :
- un gicleur 3 raccordé à une arrivée d'eau depuis le réseau de distribution, l'arrivée d'eau étant symbolisée par une flèche ;
- un porte-clapet 4, muni à l'une de ses extrémités, d'un joint ou clapet de fermeture (non visible sur la figure 1), ce dernier étant apte, selon le cas, à ouvrir ou à fermer la robinetterie pour autoriser ou non l'alimentation de la cuve en dégageant ou en obturant l'arrivée d'eau ;
- un bras 5, fixé audit porte-clapet 4 par l'intermédiaire de moyens de fixation adaptés, tels qu'une vis 6,
- un support de flotteur 7, monté sur ledit bras 5, sur lequel est solidarisé au moins un flotteur 8.

L'ensemble de ces éléments constitue une robinetterie classique, et est assemblée au bac 2 d'un abreuvoir pour animaux d'élevage, en vue du remplissage dudit bac, selon le principe décrit précédemment.

Ce mécanisme de robinetterie automatique à flotteur pour le remplissage des abreuvoirs d'animaux d'élevage présente cependant l'inconvénient majeur d'entraîner, en cours de remplissage de la cuve de l'abreuvoir, des oscillations de l'ensemble constitué notamment par le porte-clapet et les flotteurs.

A noter qu'il est indiqué que les oscillations se manifestent en cours de remplissage de la cuve de l'abreuvoir, sachant que, plus particulièrement, ces oscillations se manifestent à l'approche du niveau prédéfini de remplissage de ladite cuve.

En effet, une fois la cuve de l'abreuvoir vidée, le flotteur descendu ayant mené le clapet dans sa position d'ouverture, l'eau remplit progressivement à nouveau ladite cuve, entrainant une remontée du flotteur et un passage progressif du clapet depuis sa position d'ouverture vers sa position d'obturation de l'arrivée d'eau.

Cela étant, l'eau arrive sous pression depuis la canalisation au niveau de la robinetterie, et s'oppose à une fermeture franche de l'arrivée d'eau par l'intermédiaire du clapet.

Dans une phase précédant la fermeture même de la robinetterie, la pression exercée par l'eau remplissant la cuve sur le flotteur n'est pas suffisante pour contrecarrer instantanément la pression de l'eau du réseau et permettre un basculement du clapet directement dans sa position d'obturation.

La force exercée par l'eau remontant dans la cuve opposée à la pression de l'eau du réseau au niveau de la robinetterie, a pour conséquence de soumettre le clapet à une oscillation et de créer un phénomène de résonance qui ne s'interrompt que lorsque le niveau d'eau dans le réservoir est suffisant pour exercer une force de poussée sur le flotteur suffisante pour maintenir définitivement le clapet fermé.

En somme, de telles oscillations de l'ensemble perturbent le fonctionnement de la robinetterie automatique à flotteur, en empêchant une obturation efficace de l'arrivée d'eau par le clapet.

En outre, de telles oscillations, à peine perceptibles lorsqu'elles démarrent, prennent ensuite de l'ampleur jusqu'à générer, d'une part, des nuisances sonores pour l'utilisateur et, d'autre part, des à-coups, nommés improprement « coups de bélier », qui sont susceptibles de se propager à l'ensemble de l'installation hydraulique.

Par conséquent, dans certaines situations, les oscillations peuvent aboutir, suite à une sollicitation excessive des canalisations, à une détérioration de celles-ci, ainsi que des éléments de la robinetterie, pouvant aller jusqu'à une rupture des canalisations.

On connait également, dans l'état de la technique, le document US 3 091 253 qui décrit un robinet à flotteur pour maintenir un niveau d'eau souhaité dans des appareils d'abreuvoir destinés à des volailles, par une action d'encliquetage extrêmement rapide lors de l'ouverture ou de la fermeture.

On cherche ici notamment à éviter le mélange d'eau fraîche avec une grande quantité d'eau souillée par la volaille.

Dans ce dispositif, le mécanisme du robinet à flotteur est organisé autour d'un boitier supporté en surplomb du réservoir à remplir au moyen d'un tube d'entrée comportant un filetage s'engageant dans un tuyau d'alimentation en eau.

Un orifice d'écoulement restrictif, pour limiter le débit d'arrivée d'eau, est prévu, sous la forme d'un mamelon dans un anneau, soudé dans le tube d'entrée qui s'engage dans le tuyau d'alimentation, et formant, à l'extrémité du mamelon, un siège de soupape destiné à recevoir un élément de soupape portant un insert élastique pour interrompre l'écoulement d'eau.

Le boitier supporte également, montée de manière pivotante, une tige courbée munie d'un flotteur se trouvant dans le réservoir à remplir.

Dans ce dispositif, un levier de commande est supporté de manière pivotante par un axe sur une paroi d'un bossage formée dans le boitier. Ce levier de commande comprend un bras intérieur s'étendant à l'intérieur du boitier et un bras d'extension à l'extérieur du boitier, les deux bras ayant une relation angulaire prédéterminée.

Également, dans ce dispositif, un ressort de traction relie, par ses extrémités opposées, la tige support de flotteur et le bras intérieur du levier de commande.

Ainsi, lorsque le flotteur est en position basse dans le réservoir, donc avec un niveau d'eau relativement bas, le ressort pousse le levier de commande ainsi que la tige support de flotteur vers le bas autour de leurs points de pivotement respectifs, forçant le flotteur en dessous de son niveau normal de flottaison dans le réservoir.

La tringlerie (bras intérieur du levier de commande, ressort, tige support de flotteur d'une part, bras extérieur du levier de commande, élément de soupape avec insert d'autre part) est ici agencée de telle sorte que, lorsque le réservoir a été initialement rempli jusqu'à un niveau relativement haut, ladite tringlerie est dans une position de fermeture de la vanne et le flotteur est poussé vers le haut par le ressort. Ce n'est que lorsque l'eau s'approche d'un niveau relativement bas que le flotteur s'approche d'une position centrée qui constitue une position critique dans laquelle la tige support de flotteur entraine le levier de commande, avec une réaction extrêmement rapide d'encliquetage, entre la position de fermeture la vanne, avec l'insert élastique de l'élément de soupape engagé dans le siège de soupape, et la position d'ouverture de celle-ci pour le remplissage du réservoir. Il en est de même lors de la remontée du flotteur dans le réservoir.

Cependant, le dispositif présenté ici, comportant de nombreux éléments de tringlerie, est particulièrement complexe, et les réactions rapides, brusques et répétées d'encliquetage pour l'ouverture et la fermeture sont susceptibles d'entrainer une usure rapide des éléments du système.

La présente invention se veut à même de remédier, au moins en partie, aux inconvénients des dispositifs traditionnels de robinetterie automatique à flotteur pour le remplissage des abreuvoirs d'animaux d'élevage, en permettant une limitation substantielle, voire un empêchement total, du déclenchement d'oscillations du flotteur en cours de remplissage de la cuve.

Les inventeurs ont ainsi imaginé, pour répondre à cette problématique, et dans une démarche inventive, la mise en place d'un frein progressif à la fermeture du clapet. Par ce moyen, une résistance supplémentaire à la fermeture de ce dernier est mise en place, en sorte que ledit clapet ne puisse se fermer franchement que lorsque le niveau d'eau dans le réservoir est suffisamment élevé pour exercer une force de poussée apte à vaincre la résistance supplémentaire qui a été mise en place. Le clapet est alors maintenu définitivement refermé, empêchant ainsi le déclenchement des oscillations résultant d'une pression insuffisante exercée par la poussée de l'eau en cours de remplissage de la cuve.

Ainsi, la présente invention a, plus particulièrement, pour objet une robinetterie automatique à flotteur, notamment pour un abreuvoir pour animaux d'élevage, ledit abreuvoir comprenant un bac ou une cuve destinée à être remplie d'eau, ladite robinetterie comprenant un gicleur destiné à être raccordé à l'arrivée d'eau, lequel gicleur comporte un corps de gicleur recevant un siège de clapet sur lequel peut se refermer un clapet sous l'action d'un porte-clapet monté mobile sur le corps du gicleur, entre au moins une position d'ouverture du clapet et une position d'obturation du clapet en applique sur le siège de clapet, sous l'action du niveau d'eau dans la cuve sur au moins un flotteur solidaire d'un bras de commande que comporte ledit porte-clapet équipé dudit clapet.

La robinetterie objet de la présente invention est plus particulièrement caractérisée par le fait qu'elle comporte un dispositif anti-oscillations du clapet comprenant au moins un moyen de freinage coopérant directement ou indirectement avec ledit porte-clapet pour créer une résistance au déplacement de ce dernier, au moins à l'obturation dudit clapet.

Selon l'invention, le dispositif anti-oscillations comporte au moins une biellette dont une première extrémité est montée articulée, selon le cas, sur le bras de commande que comporte le porte-clapet ou sur le corps du gicleur et dont l'extrémité opposée est rendue solidaire de manière mobile en déplacement longitudinal, respectivement, du corps du gicleur ou du bras de commande que comporte le porte-clapet par l'intermédiaire de moyens de solidarisation de la biellette au bras ou au corps, lesdits moyens de solidarisation constituant lesdits moyens de freinage.

Selon des modes particuliers de réalisation :
- ladite biellette comporte une ouverture oblongue, s'étendant suivant l'axe longitudinal de ladite biellette, et traversée par une vis de serrage coopérant avec des moyens de rappel élastique pour exercer une force de frottement de la biellette sur le corps du gicleur ou le bras de commande que comporte le porte-clapet, et définir une résistance au déplacement de ladite biellette ;
- ladite vis de serrage traverse une ouverture ménagée dans le corps de gicleur et coopère avec un écrou frein, du côté du corps du gicleur opposé au côté où coopèrent la vis de serrage et la biellette, par rapport à l'ouverture, lesdits moyens ressorts se présentant sous la forme d'un ressort s'engageant sur ladite vis de serrage et dont la compression est réglable ;
- la robinetterie comporte des moyens de blocage du clapet en position d'obturation ;
- lesdits moyens de blocage consistent en une butée mobile entre une position de blocage et une position de déblocage du clapet en position d'obturation.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
[Fig.1] représente, de manière schématique, une vue de côté d'une robinetterie automatique à flotteur classique de l'état de la technique, équipant une cuve destinée à être remplie d'eau, notamment une cuve d'un abreuvoir pour animaux, ladite robinetterie étant dans sa position ouverte, le flotteur en position basse dans la cuve, en sorte de permettre le remplissage de ladite cuve ;
[Fig.2] représente, de manière schématique, une vue de côté d'un mode de réalisation d'une robinetterie automatique à flotteur selon la présente invention, équipée d'un dispositif destiné à empêcher les oscillations des éléments de la robinetterie en cours de remplissage de la cuve qui en est équipée, ladite robinetterie étant dans sa position fermée lorsque la cuve est remplie d'eau ;
[Fig.3] correspond à une vue similaire à la figure 2, à l'exception du fait que la robinetterie est ici dans sa position ouverte en sorte de permettre le remplissage de la cuve ;
[Fig.4] illustre, de manière schématique, une vue en perspective et partiellement éclatée d'une partie de la robinetterie automatique à flotteur selon le mode de réalisation particulier des figures 2 et 3 ;
[Fig.5] illustre, de manière schématique, une vue de face et en coupe d'une partie de la robinetterie automatique à flotteur selon le mode de réalisation des figures 2 à 4, ladite robinetterie étant dans sa position fermée, ainsi que deux vues en perspective de ladite robinetterie ;
[Fig.6] illustre, de manière schématique, une vue de face et en coupe d'une partie de la robinetterie automatique à flotteur selon le mode de réalisation des figures 2 à 4, ladite robinetterie étant dans sa position ouverte, ainsi que deux vues en perspective de ladite robinetterie ;
[Fig.7] représente schématiquement un premier exemple d'une variante de réalisation de la robinetterie automatique à flotteur selon l'invention, celle-ci comportant un moyen permettant le verrouillage de la robinetterie en position fermée, sous la forme d'une épingle de blocage, la robinetterie étant ici en position ouverte, le flotteur en position basse, permettant l'arrivée d'eau dans la cuve ;
[Fig.8] correspond à une vue similaire à la figure 7, la robinetterie étant ici en position fermée et non verrouillée par l'épingle de blocage, empêchant l'arrivée d'eau dans la cuve du fait du flotteur dans sa position haute ;
[Fig.9] correspond à une vue similaire aux figures 7 et 8, la robinetterie étant ici en position fermée et verrouillée par l'épingle de blocage, empêchant l'arrivée d'eau dans la cuve quel que soit le niveau d'eau dans celle-ci.
[Fig.10] représente schématiquement un deuxième exemple de la variante de réalisation de la robinetterie automatique à flotteur lorsque celle-ci comporte une épingle de blocage, la robinetterie étant ici en position fermée et non verrouillée par l'épingle de blocage, empêchant l'arrivée d'eau dans la cuve du fait du flotteur dans sa position haute.

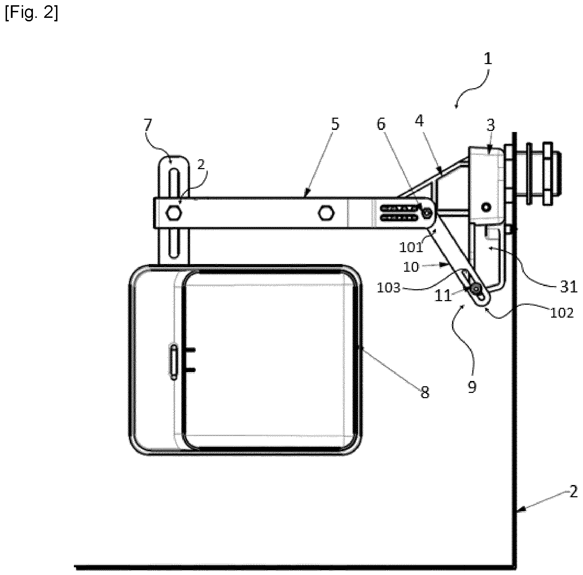

En référence aux figures 2 et suivantes des dessins ci-joints, la présente invention est relative à une robinetterie automatique 1 à flotteur, destinée à équiper, notamment mais non limitativement, un abreuvoir pour des animaux, par exemple des animaux d'élevage.

Un tel abreuvoir est, de manière classique, équipée d'une cuve 2, ou bac, destinée à être remplie d'eau.

La robinetterie automatique 1 conforme à l'invention comporte, au moins, un gicleur 3 destiné à être raccordé à l'arrivée d'eau depuis le réseau de distribution et comprenant un corps 31 de gicleur 3.

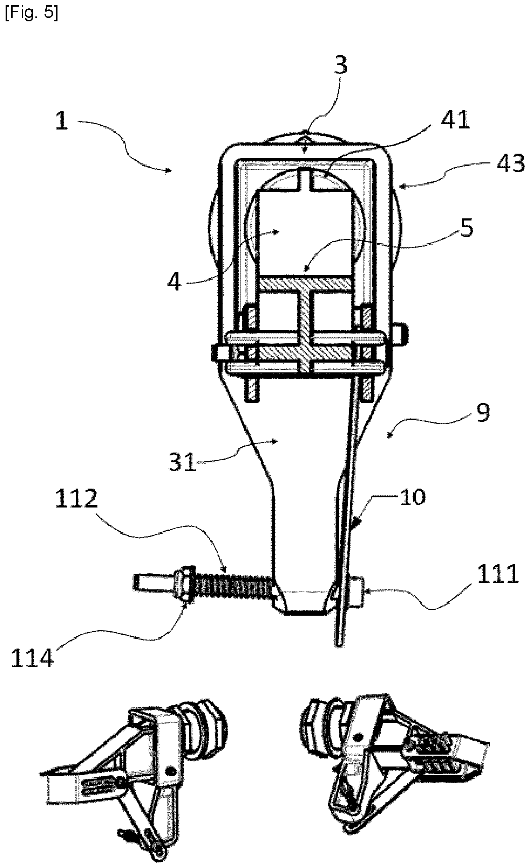

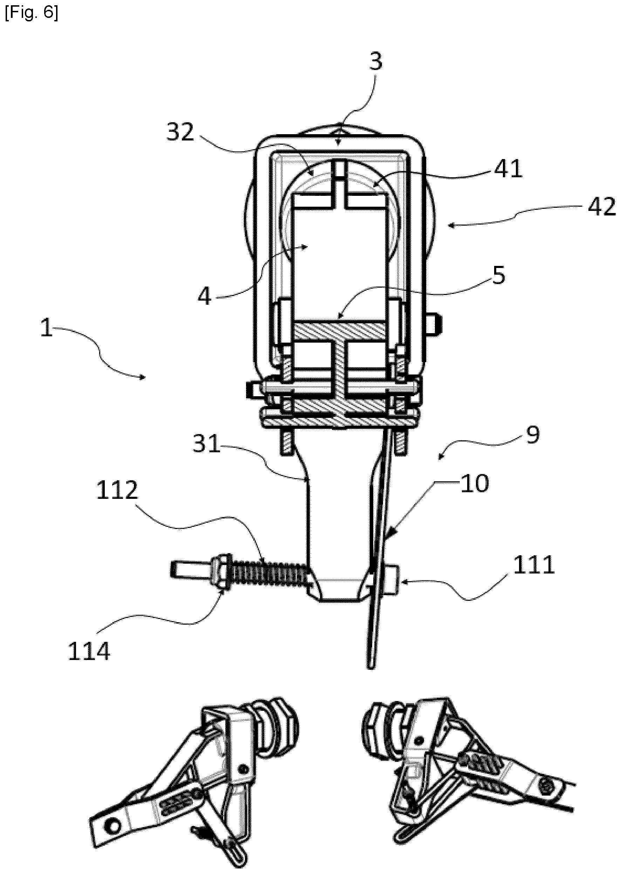

Sur ledit corps 31 de gicleur 3 est monté, de manière articulée, un porte-clapet 4 muni, à l'une de ses extrémités, d'un clapet de fermeture 41, ou joint de fermeture. Ce dernier est visible sur les figures 5 et 6.

Le corps 31 de gicleur 3 reçoit par ailleurs un siège de clapet 32, représenté sur la figure 6, sur lequel peut se refermer ledit clapet de fermeture 41 que comporte le porte-clapet 4.

L'articulation du porte-clapet 4 sur le corps 31 du gicleur 3 permet la mobilité du clapet 41 entre, au moins, une première position dite « d'ouverture » 42, visible sur la figure 6, et une deuxième position dite « d'obturation » 43 illustrée sur la figure 5.

Dans sa position d'obturation 43, le clapet de fermeture 41 est en applique sur le siège de clapet 32 que comporte le corps 31 de gicleur 3, empêchant une alimentation en eau de la cuve 2, tandis que, dans sa position d'ouverture 42, ledit clapet 41 est dégagé du siège de clapet 32, autorisant ici l'arrivée de l'eau depuis le réseau de distribution.

Le passage du clapet de fermeture 41 depuis sa position d'obturation 43 vers sa position d'ouverture 42, et inversement, s'effectue sous l'action de la variation du niveau de l'eau dans la cuve 2 de l'abreuvoir, action qui s'exerce sur au moins un flotteur 8, lequel est solidaire, par exemple, mais non limitativement, par l'intermédiaire d'un support de flotteur 7, à un bras de commande 5 que comporte le porte-clapet 4 équipé dudit clapet 41.

Ledit bras de commande 5 peut, par exemple, être solidarisé au porte-clapet 4 par l'intermédiaire de moyens de fixation adaptés, tels qu'une vis 6.

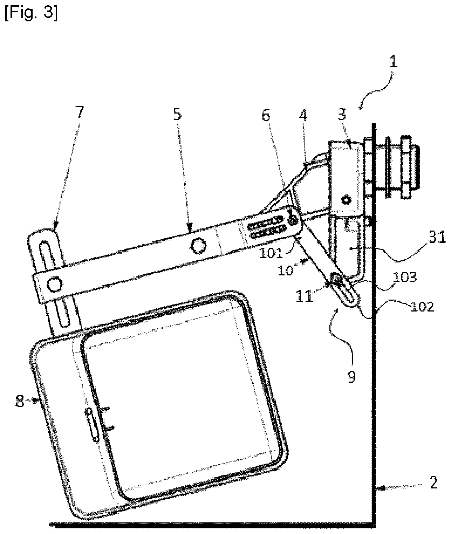

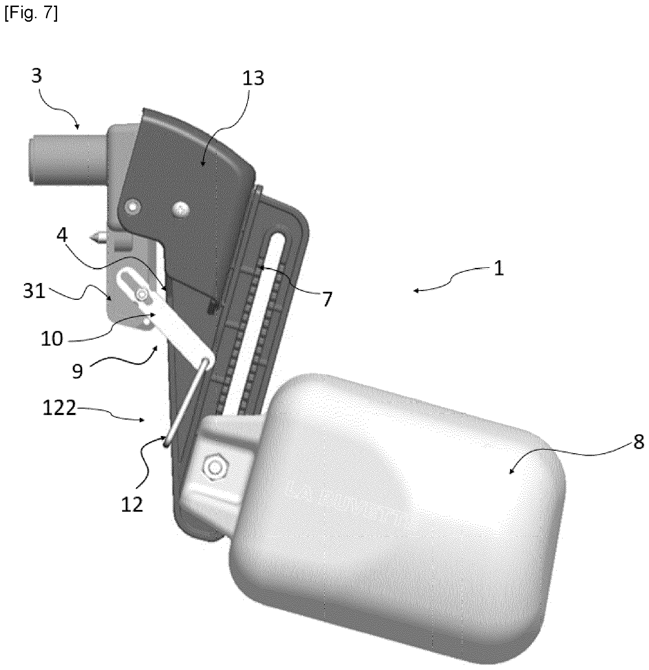

A noter en effet que, dans un mode de réalisation, illustré sur les figures 2 à 6, le porte-clapet 4, le bras de commande 5 et le support de flotteur 7 consistent en des pièces distinctes. Toutefois, et comme illustré sur les figures 7 à 10, dans une variante de réalisation qui sera décrite plus en détail ci-après, une seule et même pièce peut remplir ces fonctions de porte-clapet, de bras de commande et de support de flotteur.

La robinetterie automatique 1 à flotteur 8 de l'invention est particulière en ce qu'elle comporte un dispositif anti-oscillations 9 du clapet de fermeture 41, et, plus généralement, de l'ensemble des éléments de la robinetterie automatique 1, destiné à empêcher le déclenchement desdites oscillations notamment en cours de remplissage de la cuve 2.

Un tel dispositif anti-oscillations 9 conforme à la présente invention comprend au moins un moyen de freinage coopérant, directement ou indirectement, avec ledit porte-clapet 4, en sorte de créer une résistance au déplacement de ce porte-clapet 4, et cela au moins au moment du passage du clapet 41 dans sa position d'obturation 43.

Par conséquent, en comparaison avec un dispositif classique de robinetterie automatique qui ne comporte pas un tel moyen de freinage, on cherche à opposer une certaine résistance au passage du clapet 41 depuis sa position d'ouverture 42 vers sa position d'obturation 43, en sorte que le niveau de l'eau dans la cuve 2 devra nécessairement être supérieur afin de compenser cette résistance produite par le moyen de freinage.

En somme, ce n'est qu'au moment où la pression exercée, par l'eau remontant dans la cuve 2, sur le flotteur 8 est suffisante pour contrecarrer la résistance produite par le moyen de freinage du dispositif anti-oscillation 9, que le clapet 41 passe dans sa position d'obturation 43, de manière progressive mais en évitant, voire au moins en limitant considérablement, les oscillations.

Dans tous les cas, ces oscillations sont d'amplitude non perceptible au sens où elles ne génèrent pas une succession d'ouvertures et de fermetures du clapet 41.

Au moyen de la présente invention, une fois le clapet 41 dans sa position d'obturation 43, la résistance exercée par l'eau dans la cuve 2 est alors suffisante pour un maintien dudit clapet 41 dans sa position d'obturation 43, en applique sur le siège de clapet 32.

Par conséquent, on évite également au travers de l'invention, et de manière particulièrement avantageuse, la propagation d'un mouvement d'oscillation du clapet 41 à l'ensemble des éléments qui constituent la robinetterie automatique 1, à savoir notamment le porte-clapet 4, le bras de commande 5 et le flotteur 8, et au final la dégradation prématurée de ces éléments, de même qu'une sollicitation excessive des canalisations pouvant aboutir à leur rupture.

Les nuisances sonores induites par les oscillations sont également évitées au travers de l'invention.

Tout préférentiellement, lesdits moyens de freinage du dispositif anti-oscillation 9 dans la présente robinetterie 1 coopèrent avec le bras de commande 5 pour définir une résistance au déplacement du clapet 41 au travers du porte-clapet 4 solidarisé audit bras de commande 5.

Selon une caractéristique particulière de l'invention, le dispositif anti-oscillations 9 conforme à l'invention comporte, au moins, une biellette 10 dont une première extrémité 101 est montée articulée, selon le cas, sur le bras de commande 5 solidaire du porte-clapet 4 ou sur le corps 31 du gicleur 3 et dont l'extrémité opposée 102 est rendue solidaire, de manière mobile en déplacement longitudinal, respectivement, du corps 31 du gicleur 3 ou du bras de commande 5 solidaire du porte-clapet 4.

Une telle solidarisation de la deuxième extrémité 102 de la biellette 10 au bras de commande 5 ou au corps 31 du gicleur 3 est assurée par l'intermédiaire de moyens de solidarisation 11 de la biellette 10 au bras 5 ou au corps 31, lesdits moyens de solidarisation 11 constituant lesdits moyens de freinage permettant la mise en place de la résistance au déplacement du porte-clapet 4 à l'obturation du clapet 4 et une fermeture progressive de ce dernier.

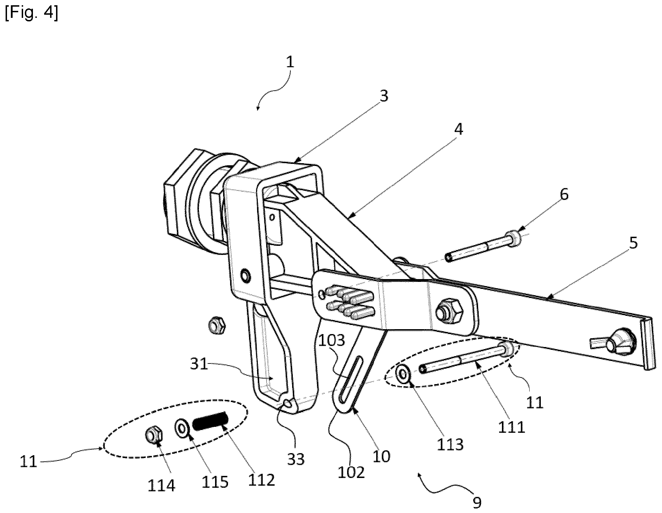

Un exemple de tels moyens de solidarisation 11 de la biellette 10 est notamment illustré sur la vue partiellement éclatée de la figure 4 des dessins ci-joints.

Dans l'exemple de réalisation préférentiel de la robinetterie automatique 1 de l'invention qui est illustré sur les figures jointes, la première extrémité 101 de la biellette 10 est montée articulée sur le bras de commande 5 au travers de la vis de solidarisation 6 du bras de commande 5 au porte-clapet 4, tandis que l'extrémité 102 de ladite biellette 10 opposée à ladite première extrémité 101 est montée mobile en déplacement longitudinal au niveau du corps 31 du gicleur 3.

Avantageusement, et tel qu'illustré, ladite biellette 10 comporte une ouverture oblongue 103 s'étendant suivant l'axe longitudinal de ladite biellette 10 traversée par une vis de serrage 111 coopérant avec des moyens de rappel élastique 112, se présentant notamment sous la forme d'un ressort 112.

Une telle coopération de la vis 111 et des moyens ressort 112 permet d'exercer une force de frottement de la biellette 10 sur le corps 31 du gicleur 3, ou bien sur le bras de commande 5 le cas échéant, afin de définir une résistance au déplacement de ladite biellette 10, une telle résistance pouvant par ailleurs être contrôlée par la compression du ressort 112.

En somme, le contrôle de la compression des moyens ressorts 112 permet une adaptation aisée à la pression du réseau d'eau à l'arrivée, afin de définir la résistance optimale à appliquer pour éviter le déclenchement des oscillations en cours de remplissage de la cuve 2.

A noter également que, en plus de permettre une adaptation à la pression du réseau d'eau, un tel contrôle permet également une adaptation du système à d'autres variables qui entrent en jeu dans le phénomène d'anti-oscillations, telles que la longueur des tuyaux de l'installation, leur diamètre, leur "souplesse"/fixation, etc.

Tout préférentiellement, et en référence au mode de réalisation illustré sur la figure 4, ladite vis de serrage 111 s'engage dans l'ouverture oblongue 103 s'étendant suivant l'axe longitudinal de ladite biellette 10 avant de traverser un trou 33 ménagé dans le corps 31 du gicleur 3. Ladite vis de serrage 111 traverse optionnellement une première rondelle 113 avant de s'engager dans l'ouverture oblongue 103 de la biellette 10.

Du côté du corps 31 du gicleur 3 opposé au côté où coopèrent la vis de serrage 111 et la biellette 10, par rapport au trou 33, le ressort 112 s'engage sur ladite vis de serrage 111 et peut être comprimé au moyen d'un écrou frein 114, une deuxième rondelle 115 étant avantageusement intercalée entre ledit ressort 112 et ledit écrou frein 114.

A noter que le ressort 112 peut également s'engager sur la vis de serrage 111 du côté du corps 31 du gicleur 3 où est située la biellette 10.

En référence, à présent, aux figures 7, 8, 9 et 10 des dessins ci-joints sont décrits ci-après deux exemples de réalisation avantageux d'une variante du dispositif de robinetterie automatique 1 selon l'invention, dans laquelle ladite robinetterie 1 comporte des moyens 12 de blocage ou de verrouillage du clapet 41 dans sa position d'obturation 43, lorsqu'il est en applique sur le siège de clapet 32, empêchant l'arrivée de l'eau dans la cuve 2.

Ces moyens de blocage 12 consistent, avantageusement, en une butée mobile entre au moins deux positions, à savoir une première position dite « de blocage » et une seconde position dite « de déblocage » du clapet 41 en position d'obturation 43, et inversement.

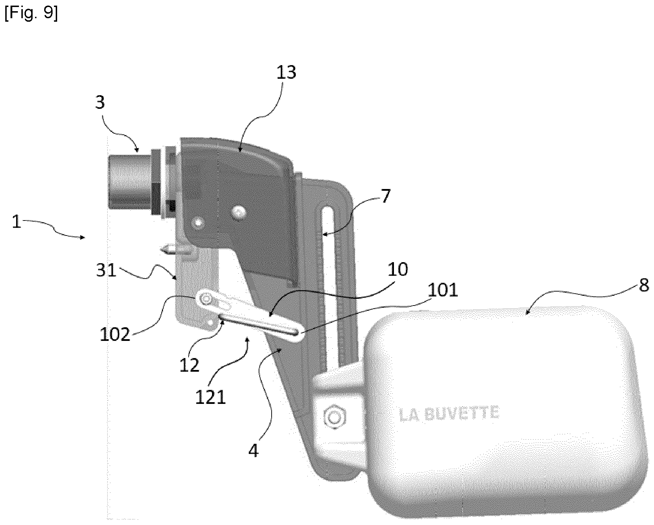

La première position de blocage 121 que peuvent prendre les moyens de blocage 12 du clapet 41 est illustrée sur la figure 9. La deuxième position de déblocage 122 de ces mêmes moyens de blocage 12 est visible, quant à elle, sur les figures 7, 8 et 10.

Notons ici que, sur les figures 7 à 10, le porte-clapet 4 comporte le bras de commande 5 et le support de flotteur, représenté ici sous la forme d'une crémaillère 7, en sorte de ne former qu'une seule et même pièce présentant les trois fonctions, sur laquelle est solidarisé un déflecteur 13.

Sur la figure 7, le flotteur 8 est en position basse dans la cuve 2 de l'abreuvoir. Le clapet 41 est, par conséquent, dans sa position d'ouverture 42 autorisant l'arrivée d'eau dans ladite cuve 2. Les moyens de blocage 12 sont, quant à eux, dans leur position de déblocage 122.

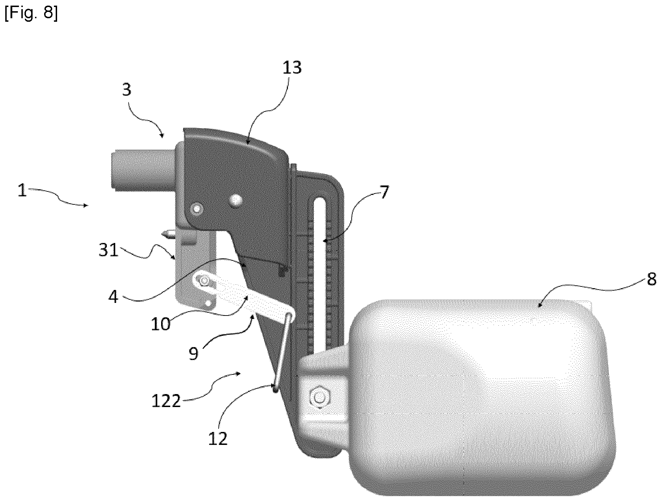

Sur la figure 8, lesdits moyens de blocage 12 sont toujours dans leur position de déblocage 122, le flotteur 8 est en position haute sous l'action de l'eau qui a rempli la cuve 2 et permis le passage du clapet 41 dans sa position d'obturation 43, sans déclenchement d'oscillation du fait de l'action du dispositif anti-oscillations 9 que comporte la robinetterie 1 selon l'invention.

Lorsque l'utilisateur de ladite robinetterie 1 souhaite éviter une arrivée d'eau dans la cuve 2, et ce quel que soit le niveau d'eau dans celle-ci, par exemple pour effectuer des opérations de nettoyage ou de maintenance de ladite cuve 2, lesdits moyens de blocage 12 peuvent aisément être passés par l'utilisateur depuis leur position de déblocage 122 vers leur position de blocage 121 pour empêcher toute arrivée de l'eau dans ladite cuve 2, et ce même si cette dernière est vide.

Dans un premier exemple de réalisation, ces moyens de blocage 12 se présentent, tels qu'illustrés sur les figures 7 à 9, sous la forme d'une épingle de blocage montée articulée sur le même axe d'articulation sur lequel est monté pivotante la biellette 10 du dispositif anti-oscillations 9 sur le porte-clapet 4, ou sur le bras de commande 5, au niveau de son extrémité 101.

Cette épingle de blocage peut ainsi passer au travers de l'articulation depuis sa position basse de déblocage 122 (figures 7 et 8) le long du porte-clapet 4 ou du bras de commande 5 vers une position haute de blocage 122 (figure 9) dans laquelle elle est remontée entre le porte-clapet 4 ou le bras de commande 5 et le corps 31 du gicleur 3, bloquant ainsi l'articulation entre le porte-clapet 4 solidarisé audit bras 5, ou ne faisant qu'un avec celui-ci, et ledit corps 31 du gicleur 3, et, par conséquent, bloquant le clapet 41 dans sa position d'obturation 43.

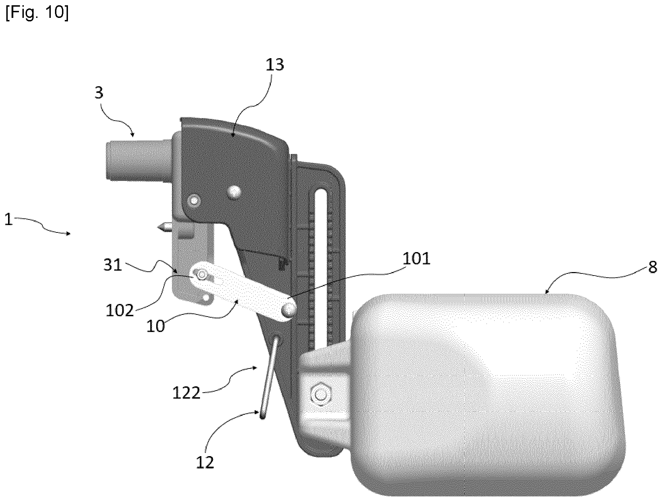

Dans un second exemple de réalisation encore plus avantageux, illustré sur la figure 10, l'épingle de blocage 12 est montée articulée sous l'articulation de la biellette 10 au porte-clapet 4, ladite biellette 10 étant alors avantageusement solidarisée, de manière optimale et sans jeu, ou avec le moins de jeu possible, au porte-clapet 4 au moyen d'une vis autoforante.

## Revendications

1. Robinetterie (1) automatique à flotteur, notamment pour un abreuvoir pour animaux d'élevage, ledit abreuvoir comprenant un bac ou une cuve (2) destinée à être remplie d'eau, ladite robinetterie (1) comprenant un gicleur (3) destiné à être raccordé à l'arrivée d'eau, lequel gicleur (3) comporte un corps (31) de gicleur (3) recevant un siège de clapet (32) sur lequel peut se refermer un clapet (41) sous l'action d'un porte-clapet (4) monté mobile sur le corps (31) du gicleur (3) entre au moins une position d'ouverture (42) du clapet (41) et une position d'obturation (43) du clapet (41) en applique sur le siège de clapet (32), sous l'action du niveau d'eau dans la cuve (2) sur au moins un flotteur (8) solidaire d'un bras de commande (5) que comporte le porte-clapet (4) équipé dudit clapet (41), ladite robinetterie (1) étant **caractérisée en ce qu'**elle comporte un dispositif anti-oscillations (9) du clapet (41) comprenant au moins un moyen de freinage coopérant directement ou indirectement avec ledit porte-clapet (4) pour créer une résistance au déplacement de ce dernier, au moins à l'obturation dudit clapet (41), ladite robinetterie étant **caractérisée en ce que** ledit dispositif anti-oscillations (9) comportant au moins une biellette (10) dont une première extrémité (101) est montée articulée, selon le cas, sur le bras de commande (5) que comporte le porte-clapet (4) ou sur le corps (31) du gicleur (3) et dont l'extrémité opposée (102) est rendue solidaire de manière mobile en déplacement longitudinal, respectivement, du corps (31) du gicleur (3) ou du bras de commande (5) que comporte le porte-clapet (4) par l'intermédiaire de moyens de solidarisation (11) de la biellette (10) au bras (5) ou au corps (31), lesdits moyens de solidarisation (11) constituant lesdits moyens de freinage.

2. Robinetterie (1) automatique à flotteur selon la revendication 1, **caractérisée en ce que** ladite biellette (10) comporte une ouverture oblongue (103), s'étendant suivant l'axe longitudinal de ladite biellette (10), et traversée par une vis de serrage (111) coopérant avec des moyens de rappel élastique (112) pour exercer une force de frottement de la biellette (10) sur le corps (31) du gicleur (3) ou le bras de commande (5) que comporte le porte-clapet (4), et définir une résistance au déplacement de ladite biellette (10).

3. Robinetterie (1) automatique à flotteur selon la revendication 2, **caractérisée en ce que** ladite vis de serrage (111) traverse une ouverture (33) ménagée dans le corps (31) de gicleur (3) et coopère avec un écrou frein (114), du côté du corps (31) du gicleur (3) opposé au côté où coopèrent la vis de serrage (111) et la biellette (10), par rapport à l'ouverture (33), lesdits moyens ressorts (112) se présentant sous la forme d'un ressort s'engageant sur ladite vis de serrage (111) et dont la compression est réglable.

4. Robinetterie (1) automatique à flotteur selon l'une quelconque des revendications 1 à 3, **caractérisée en ce qu'**elle comporte des moyens de blocage (12) du clapet (41) en position d'obturation (43).

5. Robinetterie (1) automatique à flotteur selon la revendication précédente, **caractérisée en ce que** lesdits moyens de blocage (12) consistent en une butée mobile entre une position de blocage (121) et une position de déblocage (122) du clapet (41) en position d'obturation (43).

## Patentansprüche

1. Automatische Armatur (1) mit Schwimmer, insbesondere für eine Tränke für Nutztiere, die Tränke umfassend eine Wanne oder einen Tank (2), die/der dazu bestimmt ist, mit Wasser gefüllt zu werden, die Armatur (1) umfassend eine Düse (3), die dazu bestimmt ist, an die Wasserversorgung angeschlossen zu werden, wobei die Düse (3) einen Körper (31) der Düse (3) aufweist, der einen Ventilsitz (32) aufnimmt, an dem ein Ventil (41) unter der Wirkung eines Ventilhalters (4) verschlossen werden kann, der an dem Körper (31) der Düse (3) zwischen mindestens einer Öffnungsposition (42) des Ventils (41) und einer Schließposition (43) des Ventils (41) aufliegend auf dem Ventilsitz (32) bewegbar montiert ist, unter der Wirkung des Wasserspiegels in dem Tank (2) auf mindestens einen Schwimmer (8), der an einem Steuerarm (5) befestigt ist, der von dem Ventilhalter (4) aufgewiesen ist, der mit dem Ventil (41) ausgestattet ist, wobei die Armatur (1) **dadurch gekennzeichnet ist, dass** sie eine Antischwingungsvorrichtung (9) des Ventils (41) aufweist, umfassend mindestens ein Bremsmittel, das direkt oder indirekt mit dem Ventilhalter (4) zum Erzeugen eines Widerstands gegen die Bewegung des letzteren mindestens bei dem Schließen des Ventils (41) zusammenwirkt, wobei die Armatur **dadurch gekennzeichnet ist, dass** die Antischwingungsvorrichtung (9) mindestens einen Schwingarm (10) aufweist, von dem ein erstes Ende (101) gelenkig, gegebenenfalls an dem Steuerarm (5), der von dem Ventilhalter (4) aufgewiesen ist, oder an dem Körper (31) der Düse (3) angebracht ist und dessen gegenüberliegendes Ende (102) auf in Längsrichtung bewegbare Weise an dem Körper (31) der Düse (3) oder an dem Steuerarm (5), der von dem Ventilhalter (4) aufgewiesen ist, mittels Befestigungsmitteln (11) des Schwingarms (10) an dem Arm (5) oder an dem Körper (31) befestigt ist, wobei die Befestigungsmittel (11) die Bremsmittel bilden.

2. Automatische Armatur (1) mit Schwimmer nach Anspruch 1,
**dadurch gekennzeichnet, dass** der Schwingarm (10) eine längliche Öffnung (103) aufweist, die sich entlang der Längsachse des Schwingarms (10) erstreckt und durch eine Spannschraube (111) durchquert wird, die zum Ausüben einer Reibungskraft des Schwingarms (10) auf den Körper (31) der Düse (3) oder den Steuerarm (5), der von dem Ventilhalter (4) aufgewiesen ist, und zum Definieren eines Widerstands gegen die Bewegung der Schwingarms (10) mit elastischen Rückstellmitteln (112) zusammenwirkt.

3. Automatische Armatur (1) mit Schwimmer nach Anspruch 2,
**dadurch gekennzeichnet, dass** die Spannschraube (111) eine Öffnung (33) durchquert, die in dem Körper (31) der Düse (3) vorgesehen ist und mit einer Bremsspindel (114) auf der Seite des Körpers (31) der Düse (3) gegenüber der Seite zusammenwirkt, auf der die Spannschraube (111) und der Schwingarm (10) relativ zu der Öffnung (33) zusammenwirken, wobei die Federmittel (112) in Form einer Feder ausgebildet sind, die an der Spannschraube (111) eingreift und deren Kompression einstellbar ist.

4. Automatische Armatur (1) mit Schwimmer nach einem der Ansprüche 1 bis 3, **dadurch gekennzeichnet, dass** sie Mittel (12) zum Blockieren des Ventils (41) in der geschlossenen Position (43) aufweist.

5. Automatische Armatur (1) mit Schwimmer nach dem vorstehenden Anspruch, **dadurch gekennzeichnet, dass** die Blockiermittel (12) aus einem Anschlag bestehen, der zwischen einer Blockierposition (121) und einer Freigabeposition (122) des Ventils (41) in der geschlossenen Position (43) bewegbar ist.

## Claims

1. Automatic float valve (1), in particular for a drinking trough for livestock, said drinking trough comprising a container or a tank (2) intended to be filled with water, said valve (1) comprising a nozzle (3) intended to be connected to the water inlet, which nozzle (3) comprises a body (31) of the nozzle (3) that receives a valve member seat (32) on which a valve member (41) can close under the action of a valve member holder (4) mounted on the body (31) of the nozzle (3) so as to be movable between at least an open position (42) of the valve member (41) and a closed position (43) of the valve member (41) applied against the valve member seat (32), under the action of the water level in the tank (2) on at least one float (8) secured to a control arm (5) that the valve member holder (4) fitted with said valve member (41) comprises, said valve (1) being **characterized in that** it comprises an anti-oscillation device (9) of the valve member (41), which device comprises at least one braking means cooperating directly or indirectly with said valve member holder (4) to create resistance to the displacement of the latter, at least to the closing of said valve member (41), said valve being **characterized in that** said anti-oscillation device (9) comprises at least one connecting rod (10), a first end (101) of which is hingedly mounted, as appropriate, on the control arm (5) that the valve member body (4) comprises or on the body (31) of the nozzle (3), and the opposite end (102) of which is secured, so as to be movable in longitudinal displacement, to the body (31) of the nozzle (3) or to the control arm (5) that the valve member holder (4) comprises, respectively, via means (11) for securing the connecting rod (10) to the arm (5) or to the body (31), said securing means (11) constituting said braking means.

2. Automatic float valve (1) according to claim 1, **characterized in that** said connecting rod (10) comprises an oblong opening (103), extending along the longitudinal axis of said connecting rod (10), and through which a clamping screw (111) passes which cooperates with resilient return means (112) to exert a frictional force from the connecting rod (10) on the body (31) of the nozzle (3) or the control arm (5) that the valve member holder (4) comprises, and to define a resistance to the displacement of said connecting rod (10).

3. Automatic float valve (1) according to claim 2, **characterized in that** said clamping screw (111) passes through an opening (33) made in the body (31) of the nozzle (3) and cooperates with a brake nut (114), on the side of the body (31) of the nozzle (3) opposite the side on which the clamping screw (111) and the connecting rod (10) cooperate, with respect to the opening (33), said spring means (112) being in the form of a spring which engages on said clamping screw (111) and the compression of which is adjustable.

4. Automatic float valve (1) according to any of claims 1 to 3,
**characterized in that** it comprises means (12) for locking the valve member (41) in the closed position (43).

5. Automatic float valve (1) according to the preceding claim,
**characterized in that** said locking means (12) consist of a stop which can move between a locking position (121) and an unlocking position (122) of the valve member (41) in the closed position (43).
